# EUROPÄISCHE PATENTSCHRIFT

(11) **EP 3 355 444 B1**
(45) Veröffentlichungstag und Bekanntmachung des Hinweises auf die Patenterteilung: **12.01.2022**
(21) Anmeldenummer: 17204307.7
(22) Anmeldetag: 29.11.2017
(51) Int. Cl.: H02K 1/32, H02K 9/19, H02K 17/16

(54) **ROTOR FÜR EINE ELEKTRISCHE MASCHINE, ELEKTRISCHE MASCHINE, INSBESONDERE ASYNCHRONMASCHINE, FÜR EIN KRAFTFAHRZEUG UND KRAFTFAHRZEUG**
MOTOR VEHICLE AND ROTOR FOR AN ELECTRIC MACHINE, AN ELECTRIC MACHINE, IN PARTICULAR ASYNCHRONOUS MACHINE FOR A MOTOR VEHICLE
ROTOR DE MACHINE ÉLECTRIQUE, MACHINE ÉLECTRIQUE, EN PARTICULIER MACHINE ASYNCHRONE, POUR UN VÉHICULE AUTOMOBILE ET VÉHICULE AUTOMOBILE

(30) Priorität: 30.01.2017 DE 102017201390
(43) Veröffentlichungstag der Anmeldung: 01.08.2018
(73) Patentinhaber: AUDI AG, 85045 Ingolstadt (DE)
(72) Erfinder: Holzapfel, Christian, 85101 Lenting (DE)

(56) Entgegenhaltungen:
- DE-A1-102004 049 795
- DE-A1-102015 224 034
- JP-A- S 533 605
- JP-A- H0 993 868
- JP-A- S51 110 605
- JP-A- 2011 142 788
- JP-A- 2016 049 005
- JP-U- S 497 405
- JP-U- S 637 978
- JP-U- S4 857 605
- JP-U- S51 160 106
- JP-U- S60 183 550

## Beschreibung

Die Erfindung betrifft eine elektrische Maschine nach unabhängigem Anspruch 1.

Mit der wachsenden Bedeutung der Elektromobilität gewinnen Fragen der Rotorkühlung bei elektrischen Maschinen zunehmend an Relevanz. Dies gilt besonders für Maschinen mit großer Leistungsdichte, wie sie in der Automobilindustrie als Antriebsmotoren zum Einsatz kommen. Es wurde zur Abfuhr von Wärme aus dem Rotor bereits vorgeschlagen, eine Hohlwelle vorzusehen, in die mittels einer Lanze ein Kühlmedium eingeleitet wird. Durch die Fliehkraft bei der Bewegung des Rotors fließt das Kühlmedium entlang der Hohlwelle. Nachteilig ist daran, dass Dichtungen zum Ein- und/oder Ausleiten des Kühlmediums hohen mechanischen Belastungen standhalten müssen und daher sehr anspruchsvoll zu realisieren und fehleranfällig sind. Zudem entstehen erhebliche Reibungsverluste an der Dichtung.

Um die Kühlung des Rotors über seine Welle zu vermeiden, wurde bereits vorgeschlagen, den Rotor mit einem oder mehreren Kühlkanälen auszustatten, durch die das Kühlmedium strömt. Das Kühlmedium kann dazu in einen Ringraum des Rotors eingeleitet werden, der kommunizierend mit dem oder einem jeweiligen Kühlkanal verbunden ist. Das sich im Ringraum sammelnde Kühlmedium wird dabei durch die Fliehkraft bei der Bewegung des Rotors axial durch den oder die Kühlkanäle geleitet.

DE 11 2008 000 535 T5 offenbart eine Kühlstruktur für elektrische Drehmaschinen, bei der Magnetaufnahmelöcher in einem Rotorkern derart vorgesehen sind, dass sie sich zwischen axialen Kernstirnflächen erstrecken, wobei Hohlräume jeweils in Berührung mit Permanentmagneten derart vorgesehen sind, dass sie sich zwischen den Kernstirnflächen erstrecken. Es ist ferner ein Rotorkühlflüssigkeitszufuhrkanal zum Zuführen von Kühlflüssigkeit zu einer Kernstirnfläche vorgesehen, wobei die von dem Rotorkühlflüssigkeitszufuhrkanal zugeführte Kühlflüssigkeit in die Hohlräume eingeleitet wird. An einem rotorseitigen Halter ist ein ringförmiger Reservoirbereich vorgesehen.

Die Integration eines Ringraums in einen Halter des Rotors erfordert jedoch eine komplexe Formgebung des Halters, was den Fertigungsaufwand eines solchen Rotors erheblich erhöht.

JP 2002 345 188 A offenbart einen Rotor, wobei Permanentmagnete in Magneteinführungslöchern befestigt sind, die in einem Rotorkern ausgebildet sind und sich entlang einer Rotorwelle erstrecken. Entlang der Magneteinführungslöcher sind Kühlkanäle, die ein Kühlmittel entlang der Magneteinführungslöcher führen, derart geformt, dass ihr Querschnitt zum Rotationszentrum ragt.

TW 2014 21870 A offenbart einen ölgekühlten Motor, umfassend ein Gehäuse, einen Stator und einen Rotor, welcher einen Rotorkühlkanal aufweist. Das Volumen zwischen dem Stator und dem Rotor bildet einen zylindrischen Ölkanal aus. Durch Zirkulation eines Kühlmittels innerhalb des Motors wird durch diesen erzeugte Wärme abgeführt.

JPS51160106U, JPS497405U und JPS533605 offenbaren weitere Kühlstrukturen für elektrische Maschinen.

Der Erfindung liegt die Aufgabe zugrunde, eine fertigungstechnisch aufwandsärmere Möglichkeit zur Kühlung eines Rotors mit axialen Kühlkanälen anzugeben.

Zur Lösung dieser Aufgabe ist erfindungsgemäß bei einem Rotor der eingangs genannten Art vorgesehen, dass eine an der Stirnseite befestigte, den Ringraum axial außen begrenzende Abdeckscheibe vorgesehen ist, welche eine mittige Durchgangsöffnung zum Einleiten des Kühlmediums in den Ringraum aufweist.

Der Erfindung liegt die Überlegung zugrunde, die äußere Begrenzung des Ringraums durch eine ringförmige Abdeckscheibe zu realisieren, die als separates Bauelement des Rotors an der Stirnseite des Rotors befestigt ist. Gegenüber der Integration der äußeren Begrenzung des Ringraums in einen stirnseitigen Halter ermöglicht die Erfindung den Ringraum dadurch auszubilden, dass die Abdeckscheibe lediglich an einer den Ringraum zumindest abschnittsweise radial außen und axial innen begrenzenden Struktur des Rotors angebracht werden muss. Die fertigungstechnisch aufwändige Einformung auch der axial äußeren Begrenzungen des Ringraums in einen Halter oder eine andere Rotorkomponente kann so vermieden werden. Zudem kann die Abdeckscheibe aus einem anderen, beispielsweise leichteren oder elektromagnetisch verträglicheren, Material als die übrigen Rotorkomponenten gebildet werden.

Der Ringraum des Rotors der erfindungsgemäßen Maschine erstreckt sich insbesondere vollständig in Umfangsrichtung des Rotors. Der Ringraum kann somit auch als umlaufende Radialnut erachtet oder bezeichnet werden. Der oder ein jeweiliger Kühlkanal ist kommunizierend mit dem Ringraum verbunden, insbesondere mündet der oder jeder Kühlkanal in dem Ringraum bzw. der Ring- oder Radialnut. Wird das Kühlmedium folglich abdeckscheibenseitig durch die Durchgangsöffnung zum Ringraum hin eingeleitet, gelangt es im rotierenden Betrieb des Rotors mit ausreichender Drehzahl durch die Fliehkraft an die radial äußere Begrenzung des Ringraums und wird mit weiterem Zufluss des Kühlmediums in den oder einen jeweiligen Kühlkanal geleitet. Der Ringraum realisiert somit eine Fangrinne für das in ihn eingeleitete Kühlmedium.

Die Abdeckscheibe ist üblicherweise flach, das heißt ihre axiale Ausdehnung in befestigter Stellung ist geringer als ihr Durchmesser. Zwischen einer den Rotor durchsetzenden Welle und dem Außendurchmesser der Durchgangsöffnung ist zweckmäßigerweise ein konzentrischer Freiraum zum Einleiten des Kühlmediums vorgesehen. Eine Rotorkomponente, an dem die Abdeckscheibe befestigt ist, kann auch als Rotorkörper bezeichnet werden. Mithin ist die Abdeckscheibe bezüglich des Rotorkörpers ein separates Anbauteil des Rotors. Der Rotorkörper und die Abdeckscheibe können materialverschieden sein. Durch den Rotorkörper kann der Ringraum axial innen und zumindest abschnittsweise radial außen begrenzt sein.

Bei dem Rotor der erfindungsgemäßen Maschine liegt der Außendurchmesser der Durchgangsöffnung bevorzugt weiter innen als der oder die Kühlkanäle. Mit anderen Worten erstreckt sich der Innendurchmesser der Abdeckscheibe, der die Durchgangsöffnung begrenzt, radial weiter nach innen als die radial innerste Stelle der stirnseitigen Öffnung des oder eines jeweiligen Kühlkanals, positioniert ist. Dadurch wird gewährleistet, dass ein ausreichendes Volumen zur Aufnahme des Kühlmediums durch den Ringraum gegeben ist.

Gemäß einer bevorzugten Ausgestaltung des Rotors der erfindungsgemäßen Maschine ist die Abdeckscheibe kraftschlüssig, insbesondere mittels wenigstens einer Schraube und/oder wenigstens eines Bolzens und/oder mittels eines Klebstoffs, und/oder stoffschlüssig, insbesondere mittels Schweißens, am Rotor befestigt. Die Schraube und/oder der Bolzen können dementsprechend in den Rotorkörper eindringen. Es ist ferner zweckmäßig, wenn die Abdeckscheibe in ihrem Befestigungsabschnitt mittels eines Dichtmittels, insbesondere einer Flüssigdichtung und/oder eines O-Rings, abgedichtet ist. Dem Befestigungsabschnitt der Abdeckscheibe kann dementsprechend ein rotorkörperseitiger Befestigungsabschnitt gegenüberliegen, wobei zwischen den Befestigungsabschnitten das Dichtmittel angeordnet ist. Das Dichtmittel kann auch durch den die Abdeckscheibe befestigenden Klebstoff realisiert sein.

Neben der axial äußeren Begrenzung des Ringraums durch die Abdeckscheibe ist es möglich, dass die Abdeckscheibe an der zum Ringraum weisenden Seite eine konzentrisch zur Durchgangsöffnung ausgebildete Eintiefung aufweist, deren Außendurchmesser den Ringraum zumindest abschnittsweise radial nach außen begrenzt. Die Abdeckscheibe kann mit anderen Worten eine Stufe aufweisen, durch deren Umfangsfläche der Ringraum zumindest abschnittsweise radial nach außen begrenzt ist. Es ist auch denkbar, dass der Ringraum durch den Außendurchmesser der Eintiefung bzw. die Umfangsfläche der Stufe vollständig radial nach außen begrenzt ist. Insbesondere im Hinblick auf eine Verwendung des Rotors in einer Asynchronmaschine wird es bevorzugt, wenn ein Kurzschlusskäfig vorgesehen ist. Dieser kann mehrere von der Stirnseite zur gegenüberliegenden Stirnseite verlaufend angeordnete Läuferstäbe aufweisen. Typischerweise weist der Kurzschlusskäfig zumindest an der Stirnseite, an welcher die Abdeckscheibe befestigt ist, einen Kurzschlussring auf. Die Kühlkanäle verlaufen zweckmä-ßigerweise weiter radial innen als die radiale Innenwandung des Kurzschlussrings. Der Kurzschlusskäfig ist Teil des Rotorkörpers.

Besonders bevorzugt ist der Ringraum zumindest abschnittsweise radial außen durch den Kurzschlusskäfig, insbesondere durch seinen Kurzschlussring, begrenzt. Der Kurzschlusskäfig kann dadurch zur Begrenzung des Ringraums mitverwendet werden. Das Kühlmedium kann sich dadurch vorteilhafterweise auf dem begrenzenden Abschnitt des Kurzschlusskäfigs, beispielsweise dem Innendurchmesser des Kurzschlussrings, sammeln, bevor es den oder die Kühlkanäle durchströmt. Der Ringraum kann auch vollständig axial außen durch den Kurzschlusskäfig, insbesondere den Kurzschlussring, begrenzt sein. Alternativ oder zusätzlich kann die Abdeckscheibe an dem Kurzschlusskäfig, insbesondere an dem Kurzschlussring, befestigt sein.

Bei dem Rotor der erfindungsgemäßen Maschine ist zweckmäßigerweise ein Blechpaket vorgesehen. Der oder die Kühlkanäle durchsetzen üblicherweise das Blechpaket. Wenn ein Kurzschlusskäfig vorgesehen ist, durchsetzen dessen Läuferstäbe typischerweise das Blechpaket. Das Blechpaket ist ebenfalls Teil des Rotorkörpers. Bevorzugt ist der Ringraum axial innen durch das Blechpaket begrenzt. Es kann alternativ oder zusätzlich auch vorgesehen sein, dass der Ringraum durch das Blechpaket zumindest abschnittsweise radial außen begrenzt ist. Dies gilt insbesondere, wenn kein Kurzschlusskäfig vorgesehen ist.

Die eingangs genannte Aufgabe wird erfindungsgemäß gelöst durch eine elektrische Maschine nach Anspruch 1, insbesondere Asynchronmaschine, für ein Kraftfahrzeug, umfassend einen Rotor. Sämtliche Ausführungen zum erfindungsgemäßen Rotor lassen sich analog auf die erfindungsgemäße elektrische Maschine übertragen, so dass auch mit dieser die zuvor genannten Vorteile erzielt werden können.

Bei der erfindungsgemäßen Maschine ist ein bezüglich der Drehbewegung des Rotors stationär angeordneter Zulauf vorgesehen, mittels welchem das Kühlmedium in den Ringraum einbringbar ist. Der Zulauf kann beispielsweise durch ein Rohr oder einen Schlauch ausgebildet sein. Der Zulauf kann sich von außerhalb der Durchgangsöffnung in Richtung der Stirnseite, an welcher die Abdeckscheibe befestigt ist, erstrecken. Weiterhin kann der Zulauf die Durchgangsöffnung in axialer Richtung überragen oder bündig mit der dem Ringraum zugewandten Seite der Durchgangsöffnung abschließen. Der Zulauf ist bevorzugt an einem der Bodenseite der elektrischen Maschine zugewandten Bereich der Abdeckscheibe angeordnet, so dass das Kühlmedium durch die Schwerkraft in den Ringraum fließen kann.

Zweckmäßigerweise ist ferner ein Gehäuse mit einem Ablauf vorgesehen, durch welchen das Kühlmedium nach dem Durchströmen des Rotors aus dem Inneren des Gehäuses abführbar ist. Der Ablauf ist bevorzugt der Abdeckscheibe gegenüberliegend und/oder bodenseitig angeordnet. Das durch den Ablauf austretende Kühlmedium kann zu einem externen Kühler abgeleitet und dort rückgekühlt werden.

Erfindungsgemäß ist ein Stator mit wenigstens einem Wickelkopf vorgesehen, welcher derart angeordnet ist, dass das Kühlmedium im rotierenden Betrieb des Rotors nach dem Durchströmen des Rotors auf den Wickelkopf auftrifft. Die Kühlung der elektrischen Maschine kann so aufwandsarm von einer rotorinternen Kühlung auf eine zusätzliche Kühlung des oder eines jeweiligen Wickelkopfes erweitert werden. Im Anschluss an das Auftreffen auf den Wickelkopf kann das Kühlmedium aus dem Ablauf austreten.

Bei der erfindungsgemäßen Maschine ist es außerdem von Vorteil, wenn wenigstens eine das Kühlmedium führende Einleitung und/oder wenigstens eine das Kühlmedium abgebende Düse vorgesehen ist oder sind, mittels welcher oder welchen wenigstens eine zu kühlende Maschinenkomponente mit dem Kühlmedium beaufschlagbar ist. Die oder eine jeweilige Düse kann beispielsweise vom Zulauf ausgehen und/oder auf die oder eine Maschinenkomponente gerichtet sein. Dadurch lassen sich gezielt weitere thermisch belastete Stellen der elektrischen Maschine kühlen.

Schließlich wird die eingangs genannte Aufgabe erfindungsgemäß gelöst durch ein Kraftfahrzeug, umfassend eine erfindungsgemäße elektrische Maschine. Die elektrische Maschine ist bevorzugt zum teilweisen oder vollständigen elektrischen Antrieb des Kraftfahrzeugs eingerichtet. Sämtliche Ausführung zum erfindungsgemäßen Rotor und zur erfindungsgemäßen elektrischen Maschine lassen sich analog auf das erfindungsgemäße Kraftfahrzeug übertragen, so dass auch mit diesem die zuvor genannten Vorteile erzielt werden können.

Weitere Vorteile und Einzelheiten der Erfindung ergeben sich aus den im Folgenden beschriebenen Ausführungsbeispielen sowie anhand der Zeichnung. Diese sind schematische Darstellungen und zeigen:
- Fig. 1: eine Schnittdarstellung eines Ausführungsbeispiels einer erfindungsgemäßen elektrischen Maschine; und
- Fig. 2: eine Prinzipskizze eines Ausführungsbeispiels eines erfindungsgemäßen Kraftfahrzeugs.

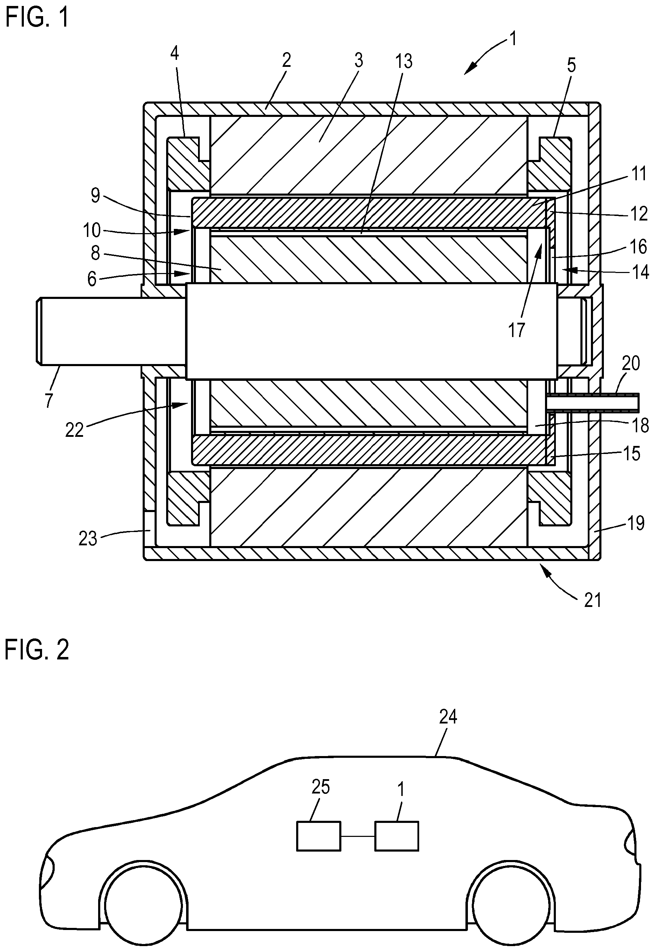

Fig. 1 zeigt eine Schnittdarstellung eines Ausführungsbeispiels einer elektrischen Maschine 1 in Form einer Asynchronmaschine, umfassend ein Gehäuse 2, einen Stator 3 mit mehreren Wickelköpfen 4, 5 und einen Rotor 6, welcher mit einer Welle 7 gekoppelt ist.

Der Rotor 6 weist einen ein Blechpaket 8 und einen Kurzschlusskäfig 9 umfassenden Rotorkörper 10 auf. Der Kurzschlusskäfig 9 umfasst eine Vielzahl von Läuferstäben 11, die das Blechpaket 8 im Wesentlichen axial durchsetzen und an ihren jeweiligen Enden durch Kurzschlussringe 12 verbunden sind. Das Blechpaket 8 ist ferner von einer Vielzahl axialer Kühlkanäle 13 durchsetzt, welche von einem Kühlmedium, beispielsweise Öl, zur Abfuhr von Wärme aus dem Inneren des Rotors 6 durchströmbar sind.

Der Rotor 6 weist ferner an einer Stirnseite 14 eine Abdeckscheibe 15 auf, die an dem Rotorkörper 10 befestigt ist. Die Befestigung ist vorliegend am Kurzschlussring 12 mittels nicht gezeigter Befestigungsmittel, beispielsweise Schrauben und/oder Bolzen, oder mittels eines Klebstoffs oder durch Schweißen realisiert. Die Abdeckscheibe 15 weist eine mittige Durchgangsöffnung 16 sowie eine an der dem Rotorkörper 10 zugewandten Seite ausgebildete Eintiefung 17 auf, die eine Stufung der Abdeckscheibe 15 bewirkt. Auf diese Weise ist ein axial innen durch das Blechpaket 8, radial außen jeweils abschnittsweise durch die Innenumfangswand des Kurzschlussrings 12 und die Außenumfangswand der Eintiefung 17 und axial außen durch die Abdeckscheibe 15 begrenzter Ringraum 18 gebildet, der kommunizierend mit den Kühlkanälen 13 verbunden ist. Der Ringraum 18 bildet also eine nach innen offene Radialnut.

Mittels eines einen Deckel 19 des Gehäuses 2 durchdringenden Zulaufs 20, beispielsweis in Form eines Rohres oder Schlauchs, ist das Kühlmedium in die elektrische Maschine 1 einleitbar. Es fließt dabei durch die Schwerkraft in Richtung einer Bodenseite 21 der elektrischen Maschine 1 in den Ringraum 18 und wird im rotierenden Betrieb des Rotors 6 durch die Fliehkraft an die radial äußere Begrenzung des Ringraums 18 bewegt. Wegen des Kontakts mit dem Kühlmedium sind gegenüberliegende Befestigungsbereiche des Rotorkörpers 10 und der Abdeckscheibe 15 durch ein Dichtmittel, welches bevorzugt eine Flüssigdichtung und/oder ein O-Ring ist, gegeneinander abgedichtet. Das sich im Ringraum 18 sammelnde Kühlmedium wird mit zunehmendem Zufluss in und durch die Kühlkanäle 13 geleitet, was einen kontinuierlichen Strom zur Kühlung des Rotors 6 bewirkt.

Nach dem Durchströmen der Kühlkanäle 13 verlässt das Kühlmedium an der gegenüberliegenden Stirnseite 22 die Kühlkanäle und wird infolge der Drehbewegung des Rotors 6 in Richtung der Wickelköpfe 4 geschleudert, welche durch das auftreffende Kühlmedium ebenfalls gekühlt werden. Dieses fließt dann von den Wickelköpfen 4 oder unmittelbar nach Austritt aus den Kühlkanälen 13 zur Bodenseite 21. Das Gehäuse 2 weist ferner einen Ablauf 23 auf, durch welchen das Kühlmedium das Innere der elektrischen Maschine 1 verlässt. Das ausgetretene Kühlmedium wird dann zur Realisierung eines Kühlkreislaufs einem externen Kühler und anschließend erneut dem Zulauf 20 zugeführt.

Darüber hinaus sind weitere nicht gezeigte Einleitungen des Kühlmediums in das Innere der elektrischen Maschine 1 zur Kühlung weiterer thermisch belasteter Bereiche vorgesehen. An den Einleitungen oder am Zulauf 20 können auf diese Bereiche gerichtete Düsen vorgesehen sein, aus welchen das Kühlmedium austritt und entsprechende thermisch belastete Maschinenkomponenten beaufschlagt. Ein Abfluss des so abgegebenen Kühlmediums wird dabei ebenfalls durch den bodenseitigen Ablauf 23 ermöglicht.

Gemäß einem weiteren Ausführungsbeispiel wird die radial äußere Begrenzung des Ringraums 18 vollständig durch den Rotorkörper 10, insbesondere durch den Kurzschlussring 12 gebildet. Bei einem alternativen Ausführungsbeispiels, bei dem ganz auf den Kurzschlusskäfig 9 verzichtet werden kann, wird der Ringraum radial außen vollständig durch die gestufte Abdeckscheibe 15 begrenzt. Dies ist zweckmäßig, wenn die elektrische Maschine 1 eine Synchronmaschine ist. Im Rahmen eines weiteren Ausführungsbeispiels kann der Ringraum 18 radial außen vollständig oder abschnittsweise durch das Blechpaket 8 begrenzt sein.

Fig. 2 zeigt eine Prinzipskizze eines Ausführungsbeispiels eines Kraftfahrzeugs 24 mit einer elektrischen Maschine 1 gemäß einem der vorangegangenen Ausführungsbeispiele. Die elektrische Maschine 1 ist zum vollständigen oder teilweisen Antrieb des Kraftfahrzeug 1 mit einem Antriebstrang 25 des Kraftfahrzeugs 24 verbunden.

## Patentansprüche

1. Elektrische Maschine für ein Kraftfahrzeug (24), umfassend einen Rotor (6) mit einem oder mehreren durch ein Kühlmedium durchströmbaren Kühlkanälen (13), wobei an einer Stirnseite (14) des Rotors (6) ein axial nach innen und radial nach außen begrenzter, mit dem oder den Kühlkanälen (13) kommunizierend verbundener Ringraum (18) vorgesehen ist, wobei eine an der Stirnseite (14) befestigte, den Ringraum (18) axial außen begrenzende Abdeckscheibe (15) vorgesehen ist, welche eine mittige Durchgangsöffnung (16) zum Einleiten des Kühlmediums in den Ringraum (18) aufweist, wobei ein bezüglich der Drehbewegung des Rotors (6) stationär angeordneter Zulauf (20) vorgesehen ist, mittels welchem das Kühlmedium in den Ringraum (18) eingebracht wird, wobei ein Stator (3) mit wenigstens einem Wickelkopf (4) vorgesehen ist, welcher derart angeordnet ist, dass das Kühlmedium im rotierenden Betrieb des Rotors (6) nach dem Durchströmen des Rotors (6) auf dem Wickelkopf (4) auftrifft, wobei an dem Zulauf (20) wenigstens eine das Kühlmedium abgebende Düse vorgesehen ist, mittels welcher wenigstens eine zu kühlende Maschinenkomponente mit dem Kühlmedium beaufschlagt wird.

2. Elektrische Maschine nach Anspruch 1,
**dadurch gekennzeichnet,**
**dass** der Außendurchmesser der Durchgangsöffnung (16) weiter innen liegt als der oder die Kühlkanäle (13).

3. Elektrische Maschine nach Anspruch 1 oder 2,
**dadurch gekennzeichnet,**
**dass** die Abdeckscheibe (15) kraftschlüssig, insbesondere mittels wenigstens einer Schraube und/oder wenigstens eines Bolzens und/oder mittels eines Klebstoffs, und/oder stoffschlüssig, insbesondere mittels Schweißens, am Rotor (6) befestigt ist.

4. Elektrische Maschine nach einem der vorhergehenden Ansprüche, **dadurch gekennzeichnet,**
**dass** die Abdeckscheibe (15) in ihrem Befestigungsabschnitt mittels eines Dichtmittels, insbesondere einer Flüssigdichtung, abgedichtet ist.

5. Elektrische Maschine nach einem der vorhergehenden Ansprüche, **dadurch gekennzeichnet,**
**dass** die Abdeckscheibe (15) an der zum Ringraum (18) weisenden Seite eine konzentrisch zur Durchgangsöffnung (16) ausgebildete Eintiefung (17) aufweist, deren Außendurchmesser den Ringraum (18) zumindest abschnittsweise radial nach außen begrenzt.

6. Elektrische Maschine nach einem der vorhergehenden Ansprüche, **dadurch gekennzeichnet,**
**dass** ein Kurzschlusskäfig (9) vorgesehen ist, durch welchen der Ringraum (18) zumindest abschnittsweise radial außen begrenzt ist und/oder an welchem die Abdeckscheibe (15) befestigt ist.

7. Elektrische Maschine nach einem der vorhergehenden Ansprüche, **dadurch gekennzeichnet,**
**dass** ein Blechpaket (8) vorgesehen ist, durch welches der Ringraum (18) axial innen und/oder zumindest abschnittsweise radial außen begrenzt ist und/oder welches von dem oder den Kühlkanälen (13) durchsetzt ist.

8. Elektrische Maschine nach einem der vorhergehenden Ansprüche, **dadurch gekennzeichnet,**
**dass** die elektrische Maschine eine Asynchronmaschine ist.

9. Elektrische Maschine nach einem der vorangehenden Ansprüche, **dadurch gekennzeichnet,**
**dass** ein Gehäuse (2) mit einem Ablauf (23) vorgesehen ist, durch welchen das Kühlmedium nach dem Durchströmen des Rotors (6) aus dem Inneren des Gehäuses (2) abführbar ist.

10. Elektrische Maschine nach einem der vorangehenden Ansprüche, **dadurch gekennzeichnet,**
**dass** wenigstens eine weitere das Kühlmedium führende Einleitung vorgesehen ist, mittels welcher wenigstens eine zu kühlende Maschinenkomponente mit dem Kühlmedium beaufschlagbar ist.

11. Kraftfahrzeug, umfassend eine elektrische Maschine (1) nach einem der vorangehenden Ansprüche.

## Claims

1. Electric machine for a motor vehicle (24), comprising a rotor (6) having one or more cooling ducts (13) through which a cooling medium can flow, wherein on an end face (14) of the rotor (6) an annular space (18) is provided which is limited axially inwards and radially outwards and is connected in a communicating manner to the cooling channel or channels (13), wherein a cover disc (15) is provided which is attached to the end face (14) and delimits the annular space (18) axially outwards and has a central through opening (16) for introducing the cooling medium into the annular space (18), wherein an inlet (20) is provided which is stationary with respect to the rotary movement of the rotor (6), by means of which inlet the cooling medium is introduced into the annular space (18), wherein a stator (3) is provided with at least one winding head (4) which is arranged in such a way that the cooling medium impinges on the winding head (4) after flowing through the rotor (6) during the rotary operation of the rotor (6), wherein at least one nozzle which discharges the cooling medium is provided at the inlet (20), by means of which nozzle at least one machine component to be cooled is acted upon by the cooling medium.

2. Electric machine according to claim 1,
**characterised in that**
the outer diameter of the through opening (16) lies further inwards than the cooling channel or channels (13).

3. Electric machine according to claim 1 or 2,
**characterised in that**
the cover disc (15) is secured to the rotor (6) in a force-fitting manner, in particular by means of at least one screw and/or at least one bolt and/or by means of an adhesive, and/or in a material-bonded manner, in particular by means of welding.

4. Electric machine according to any of the preceding claims,
**characterised in that**
the cover disc (15) is sealed in its fastening section by means of a sealant, in particular a liquid seal.

5. Electric machine according to any of the preceding claims,
**characterised in that**
the cover disc (15) on the side facing the annular space (18) has a depression (17) formed concentrically to the through opening (16), the outer diameter of which depression delimits the annular space (18) radially outwards, at least in sections.

6. Electric machine according to any of the preceding claims,
**characterised in that**
a short-circuit cage (9) is provided, by means of which the annular space (18) is delimited radially outwards at least in sections and/or to which the cover disc (15) is secured.

7. Electric machine according to any of the preceding claims,
**characterised in that**
a bundle of laminations (8) is provided, by which the annular space (18) is delimited axially inwards and/or at least in sections radially outwards and/or which is penetrated by the cooling channel or channels (13).

8. Electric machine according to any of the preceding claims,
**characterised in that**
the electric machine is an asynchronous machine.

9. Electric machine according to any of the preceding claims,
**characterised in that**
a housing (2) is provided with an drain (23), through which the cooling medium can be discharged from the interior of the housing (2) after flowing though the rotor (6).

10. Electric machine according to any of the preceding claims,
**characterised in that**
at least one further inlet carrying the cooling medium is provided, by means of which at least one machine component to be cooled can be acted on by the cooling medium.

11. Motor vehicle, comprising an electric machine (1) according to any of the preceding claims.

## Revendications

1. Moteur électrique pour un véhicule automobile (24), comprenant un rotor (6) avec un ou plusieurs canaux de refroidissement (13) à travers lesquels un fluide de refroidissement peut s'écouler, dans lequel un espace annulaire (18) délimité axialement vers l'intérieur et radialement vers l'extérieur et relié en communication avec le ou les canaux de refroidissement (13) est prévu sur une face frontale (14) du rotor (6), dans lequel un disque de recouvrement (15) fixé sur la face frontale (14) et délimitant l'espace annulaire (18) axialement vers l'extérieur est prévu, lequel présente une ouverture de passage centrale (16) pour introduire le fluide de refroidissement dans l'espace annulaire (18), dans lequel une entrée (20) agencée de manière fixe par rapport au mouvement de rotation du rotor (6) est prévue, au moyen de laquelle le fluide de refroidissement est introduit dans l'espace annulaire (18),
dans lequel un stator (3) est prévu avec au moins une tête d'enroulement (4), qui est agencé de telle sorte que le fluide de refroidissement heurte la tête d'enroulement (4) pendant le fonctionnement en rotation du rotor (6) après avoir traversé le rotor (6), dans lequel au moins une buse évacuant le fluide de refroidissement est prévue à l'entrée (20), au moyen de laquelle au moins un composant de moteur à refroidir est sollicité par le fluide de refroidissement.

2. Moteur électrique selon la revendication 1
**caractérisé en ce que**
le diamètre extérieur de l'ouverture de passage (16) se situe plus à l'intérieur que le ou les canaux de refroidissement (13).

3. Moteur électrique selon la revendication 1 ou 2,
**caractérisé en ce que**
le disque de recouvrement (15) est fixé au rotor (6) par liaison de force, en particulier au moyen d'au moins une vis et/ou d'au moins un boulon et/ou au moyen d'une colle, et/ou par liaison de matière, en particulier au moyen d'un soudage.

4. Moteur électrique selon l'une quelconque des revendications précédentes,
**caractérisé en ce que**
le disque de recouvrement (15) est rendu étanche dans sa partie de fixation au moyen d'un agent d'étanchéité, en particulier d'un liquide d'étanchéité.

5. Moteur électrique selon l'une quelconque des revendications précédentes,
**caractérisé en ce que**
le disque de recouvrement (15) présente, sur le côté tourné vers l'espace annulaire (18), un évidement (17) formé de manière concentrique par rapport à l'ouverture de passage (16) et dont le diamètre extérieur délimite l'espace annulaire (18) au moins partiellement radialement vers l'extérieur.

6. Moteur électrique selon l'une quelconque des revendications précédentes,
**caractérisé en ce qu'**
une cage de court-circuit (9) est prévue, au moyen de laquelle l'espace annulaire (18) est délimité au moins par endroits radialement à l'extérieur et/ou sur laquelle le disque de recouvrement (15) est fixé.

7. Moteur électrique selon l'une quelconque des revendications précédentes,
**caractérisé en ce qu'**
un paquet de tôles (8) est prévu, au moyen duquel l'espace annulaire (18) est délimité axialement à l'intérieur et/ou au moins par sections radialement à l'extérieur et/ou à travers lequel passe le ou les canaux de refroidissement (13).

8. Moteur électrique selon l'une quelconque des revendications précédentes,
**caractérisé en ce que**
le moteur électrique est un moteur asynchrone.

9. Moteur électrique (1) selon l'une quelconque des revendications précédentes,
**caractérisé en ce qu'**
un boîtier (2) est prévu avec une sortie (23) à travers laquelle le fluide de refroidissement peut être évacué depuis l'intérieur du boîtier (2) après avoir traversé le rotor (6).

10. Moteur électrique selon l'une quelconque des revendications précédentes,
**caractérisé en ce qu'**
au moins une entrée supplémentaire qui transporte le fluide de refroidissement est prévue, au moyen de laquelle au moins un composant de moteur à refroidir peut être sollicité par le fluide de refroidissement.

11. Véhicule automobile comprenant un moteur électrique (1) selon l'une quelconque des revendications précédentes.
